# EUROPEAN PATENT APPLICATION

(11) **EP 0 562 850 A2**
(43) Date of publication of application: **29.09.1993**
(21) Application number: 93302267.5
(22) Date of filing: 25.03.1993
(51) Int. Cl.: H05B 1/02, H05B 3/36

(54) **Heating device**

(30) Priority: 26.03.1992 GB 9206641
(71) Applicant: DREAMLAND APPLIANCES LIMITED, Oldham OL2 5LN (GB)
(72) Inventor: Simpson,Barry, Rochdale,Lancashire (GB); Chalmers,Ronald, Chingford, London E4 7EX (GB)
(74) Representative: Robinson, Nigel Alexander Julian

(57) **Abstract**

A heating device such as an electric blanket or pad includes a substrate and a heating element (10) that heats the substrate. The heating element (10) has first and second elongate conductors (12,14) arranged coextensively with one another, at least one of them being a resistive heating conductor, and an insulator (16) that separates the conductors. A half-wave rectifier such as a diode (D1) is connected between an end (22) of the first conductor (12) and an end (24) of the second conductor (14). The first and second conductors (12,14), input terminals (18,20) for connection to an AC supply, and the diode (D1) are so interconnected that, during half-cycles of the AC supply of one polarity only, heating current from the supply will flow through a first path comprising the first conductor (12), the diode (D1) and the second conductor (14), with the heating current flowing in opposite directions in the first and second conductors, respectively. A fuse (F) and a thermally actuated circuit interruption device (TF) are connected in the first path. A resistor (R), which is thermally coupled to the thermally actuated circuit interruption device (TF), is connected in series with a second diode (D2) between one (20) of the input terminals (18, 20) and an end (28) of the second conductor (14) such that, in the event of a reduction in the impedance of the insulative means (16), current can flow from the supply during half-cycles of the AC supply of the opposite polarity through a second path comprising, the second diode (D2) and the reduced impedance. Current flow through this second path serves to actuate the thermally actuated circuit interruption device (TF). A transistor (T1) may be used to drive the resistor (R) in response to current flow through this second path.

## Description

This invention relates to heating devices having flexible substrates, for instance electric blankets and electric pads.

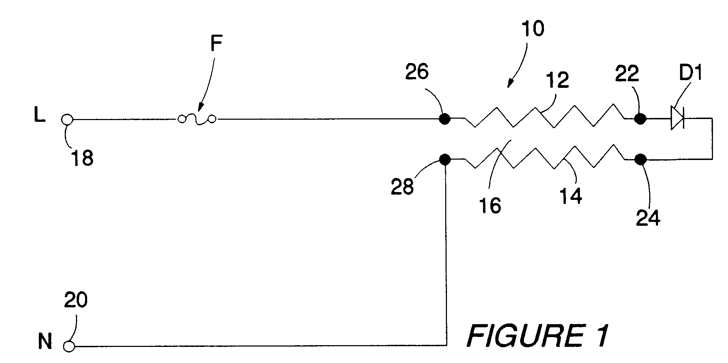

Figure 1 of the accompanying drawings is a circuit diagram of a heating device (in the form of an electric blanket or an electric pad) as disclosed in UK Patent Specification GB-A-1 155 118 (Dreamland Electric Appliances Limited), more particularly as illustrated in Figure 1 thereof. The heating device comprises a flexible, sheet-like substrate (not shown), in the form of a blanket or pad, and a heating element 10 arranged in a manner known per se to heat the substrate. The heating element 10 comprises first and second elongate conductors 12, 14 arranged coextensively or side-by-side with one another. At least one of the conductors 12, 14 is a resistive heating conductor, being for example of nichrome wire. In Figure 1, it is assumed that both the conductors 12, 14 are resistive heating conductors, which is why they are both represented schematically as resistors. The heating element 10 also comprises an insulator or insulative means, shown schematically at 16, that separates the conductors 12, 14.

By way of example, the heating element 10 may be in the form of a dual coaxial cable as well known in the art. In this case, one of the conductors 12, 14 may be an inner conductor wound on an insulative core, the insulative means 16 may be an insulative layer that sheaths the inner conductor, the other of the conductors 12, 14 may be an outer conductor wound on the insulative layer, and another insulative layer may sheath the outer conductor. In a manner well known in the art, the cable is tortuously disposed in or on, for example, a shell or substrate of an electric blanket or pad.

The heating device as depicted in Figure 1 further comprises a pair of input terminals 18, 20 which are connected in use to the line (L) and neutral (N) poles, respectively, of an alternating current ("AC") supply. A half wave rectifier, shown (for example) as being a diode D1, is connected between an end 22 of the first conductor 12 and an end 24 of the second conductor 14. The input terminal 18 is connected to the other end 26 of the first conductor 12 via a fuse F; and the input terminal 20 is connected directly to the other end 28 of the second conductor 14. Thus, the first and second conductors 12, 14, the input terminals 18, 20 and the diode D1 are so interconnected that, during half-cycles of the AC supply of one polarity only (positive half-cycles in the illustrated case, though it would be negative half-cycles if the diode D1 were oppositely poled), heating current from the supply will flow through a path comprising the fuse F, the first conductor 12, the diode D1 and the second conductor 14. During normal operation, that is while the insulative means 16 remains substantially insulative, substantially no current flows from the supply during supply half-cycles of the opposite polarity because the diode D1 is reverse biassed.

It will be noted that, by virtue of the diode D1 connecting the ends 22, 24 of the conductors 12, 14 together, the heating current flows in opposite directions in the first and second conductors 12, 14, respectively. Thus, the electromagnetic fields produced by the current flowing through the respective conductors 12, 14 tend to cancel one another, thereby greatly attenuating the nett field strength compared to what would be the case if the current flowed in the same direction through the two conductors. Accordingly, in view of recent suggestions that prolonged intimate exposure to electromagnetic fields produced by electric blankets or pads may be harmful, the above field cancellation feature represents an important advantage in the case where the heating device is, as in the case of an overblanket, an all-night underblanket or an electric pad, intended to,be energised when in close proximity to a user.

The device of Figure 1 provides protection against overheating. In normal operation, the current flowing through the fuse F is half-wave rectified. Also, in normal operation, the temperature of the insulating means 16, which is a layer of plastics material, does not come near its softening temperature. However, in some circumstances, for instance in the event of a ruck in the blanket or pad, the layer 16 can be locally heated to a temperature at which it melts or softens sufficiently for the conductors 12, 14 to come into contact with one another. That is, the impedance of the layer 16 is locally reduced, in this case by a short circuit. (Note that the impedance is not necessarily reduced to zero, since the short circuit may be "lossy"; however, there will be a significant localised drop in impedance.) When this happens the diode D1 is short-circuited by the local impedance reduction, so that full wave AC current starts to flow through the fuse F. This at least nearly doubles the current flowing through the fuse F, causing it to "blow" (rupture due to excessive current flow through it). The nearer the fault (overheat) location is to the end of the element 10 nearer the supply, then the less impedance there is in the current path and hence the greater the current. The root-mean-square rating of the fuse F is selected such that, at least in theory, it will rupture even when the fault is located at the end of the cable remote from the supply.

The circuit of GB-A-1 155 118, as described above with reference to Figure 1 is subject to two disadvantages. First, as explained in GB-A-1 585 921 (Dreamland Electrical Appliances Limited), which describes an improvement to the circuit of GB-A-1 155 118, worst case combinations of tolerances of the supply voltage and fuse resistance, coupled with the practical necessity to chose a fuse of a standard rating, makes it extremely difficult or impossible to guarantee that, in the event of local overheating involving contact of the conductors 12, 14, the fuse will blow in all circumstances, or at least not take an unacceptably long time to blow. Second, the operation of the circuit relies upon localised melting/softening of the insulative means 16, which precludes the use of another type of insulative means (so-called "NTC material") conventionally used in heating elements for electric blankets or the like, which material has a negative temperature coefficient whereby a localised reduction in impedance of the material due to localised overheating that is not necessarily of an extent sufficient to cause melting and conductor contact can be sensed and used for protective purposes.

The use of a resistor that heats a thermally actuated circuit interruption device (such as a thermal fuse) in response to current flowing through the resistor and NTC material in a heating element for an electric blanket is known per se: see, for example GB-A-1 599 709 (Dreamland Electrical Appliances Limited) and GB-A-2 020 123 (Dreamland Electrical Appliances PLC).

According to the present invention there is provided a heating device comprising:
a substrate;
a heating element arranged to heat the substrate, the heating element comprising first and second elongate conductors arranged coextensively with one another, at least one of the conductors being a resistive heating conductor, and insulative means that separates the first and second conductors;
input terminals for connection to an AC supply;
a first half-wave rectifier connected between an end of the first conductor and an end of the second conductor;
the first and second conductors, the input terminals and the first half-wave rectifier being so interconnected that, during half-cycles of the AC supply of one polarity only, heating current from the supply will flow through a path comprising the first conductor, the first half-wave rectifier and the second conductor, with the heating current flowing in opposite directions in the first and second conductors, respectively; and
a fuse connected in said path;
the heating device being characterised by:
a thermally actuated circuit interruption device connected in said path;
a second half-wave rectifier connected between one of the input terminals and an end of the second conductor; and
a resistor which is thermally coupled to the thermally actuated circuit interruption device, the resistor being electrically coupled to the second half-wave rectifier such that, in the event of a reduction in the impedance of the insulative means, current flows from the supply during half-cycles of the AC supply of the opposite polarity through a second path including the second half-wave rectifier and the reduced impedance to cause current to flow through the resistor to actuate the thermally actuated circuit interruption device.

In a simple manner, the present invention improves the invention of GB-A-1 155 118, by employing a second half-wave rectifier and a thermally actuated circuit interruption device (preferably a thermal fuse), connected in series with one another and connected to the other circuit components as set forth above, so that two separate protective mechanisms (that of GB-A-1 155 118 and that of thermal circuit interruption) against overheating are provided. Not only does this provide extra protection by redundancy, but the above-described problem of potential unreliability of the first mechanism in some circumstances is solved by the back-up protection provided by the second mechanism. That is, the heating device of the invention provides a high degree of safety against overheating. Also, the invention can be used with an insulative means that has NTC characteristics (whereby softening/melting to an extent necessary to cause conductor contact is not essential) as well as with an insulative means which has to melt/soften to cause conductor contact.

In addition, the use of current of the opposite polarity flowing through the second half-wave rectifier to trigger the circuit interruption, has the advantage of reliably providing increased sensitivity. Since current of the opposite polarity is substantially fully blocked by the first half-wave rectifier during normal operation, the arrangement can be such that even a small amount of current of the opposite polarity triggers the fail safe operation without having to demand close component tolerances and/or run the risk of false fail safe operation.

As explained below, the heating circuit of the invention not only achieves a high degree of safety against overheating, but also (by virtue of the heating current flowing in opposite directions in the first and second conductors) achieves low electromagnetic field radiation. See below for a fuller explanation.

The invention will now be further described, by way of illustrative and non-limiting example, with reference to the accompanying drawings, in which like reference signs designate like items throughout, and in which:
Figure 1 is a circuit diagram of the above-described heating device disclosed in GB-A 1 155 118; and
Figures 2 to 11 are circuit diagrams of respective different heating devices embodying the invention.

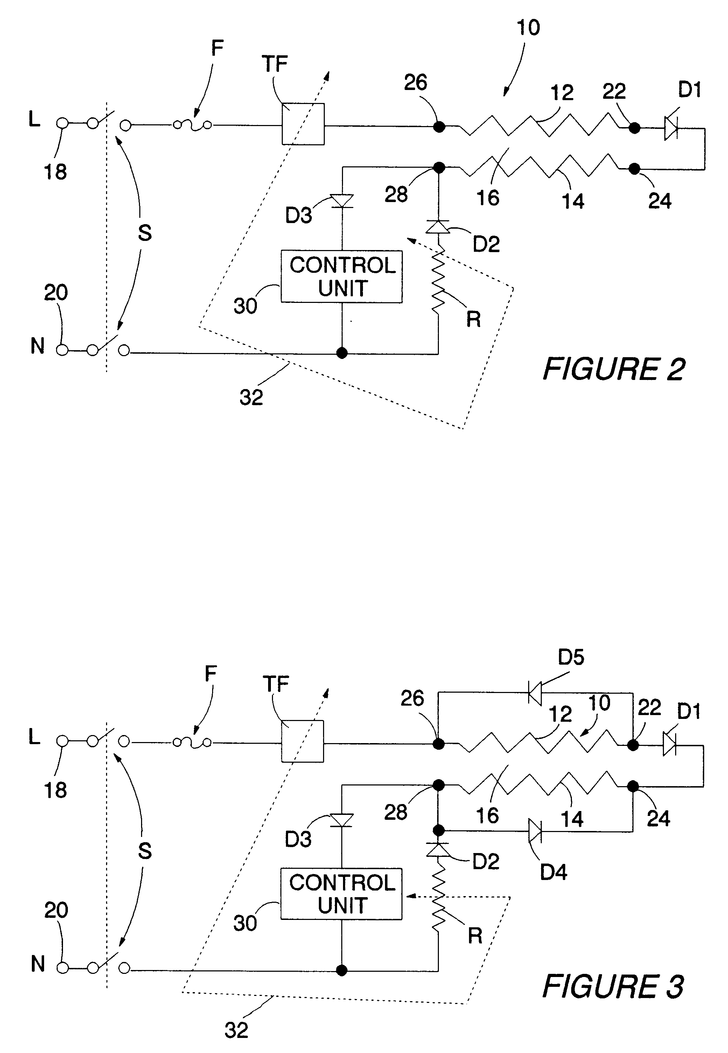

Figure 2 is a circuit diagram of a heating device according to a first embodiment of the present invention. Like the device of Figure 1, that of Figure 2 comprises a flexible, sheet-like substrate (not shown), in the form of a blanket or pad, and a heating element 10 arranged in a manner known per se to heat the substrate. The heating element 10 comprises first and second elongate conductors 12, 14 arranged coextensively or side-by-side with one another. In this embodiment, both of the conductors 12, 14 are resistive heating conductor, being for example of nichrome wire, which is why they are both represented schematically as resistors.

The heating element 10 also comprises insulative means, shown schematically at 16, that separates the conductors 12, 14. As known per se in the art, the insulative means 16 may comprise a material ("NTC material") that has a negative temperature coefficient, that is whose impedance (or at least resistance) decreases with increasing temperature, for example polyvinylchloride ("PVC") which may or may not be doped with a material that enhances its conductivity. Alternatively, the insulative means may comprise a material whose impedance does not decrease with temperature, or at least can be considered for present purposes as not doing so, for example polyethylene.

By way of example, the heating element 10 may be in the form of a dual coaxial cable as well known in the art. In this case, one of the conductors 12, 14 may be an inner conductor wound on an insulative core, the insulative means 16 may be an insulative layer that sheaths the inner conductor, the other of the conductors 12, 14 may be an outer conductor wound on the insulative layer, and another insulative layer sheaths the outer conductor. In a manner well known in the art, the cable is tortuously disposed in or on, for example, a blanket shell or substrate. The heating element 10 need not, however, take the form of a dual coaxial cable. In general, use can be made of any form of heating element 10 that comprises the two elongate coextensive conductors 12, 14 separated by the insulative layer 16. For example, the heating element could comprise a structure having the conductors 12, 14 arranged parallel with one another; or could comprise a twisted pair of wires with sheaths of the two twisted-together wires cooperating to form the insulative means 16.

The device as depicted in Figure 2 further comprises a pair of input terminals 18, 20 which are connected in use to the line (L) and neutral (N) poles, respectively, of an alternating current ("AC") supply, and an ON-OFF or supply switch S. A half-wave rectifier in the form of a diode D1 is connected between an end 22 of the first conductor 12 and an end 24 of the second conductor 14. The input terminal 18 is connected to the other end 26 of the first conductor 12 via a contact set of the switch S, a fuse F and a thermal fuse TF. A resistor R is connected in series with a half-wave rectifier in the form of a diode D2 between the input terminal 20 (via another contact set of the switch S) and the other end 28 of the second conductor 14. The input terminal 20 is connected to the end 28 of the second conductor 14 via the other contact set of the switch S, a control unit 30 and a half-wave rectifier in the form of a diode D3. A thermal fuse, as known to those skilled in the art, is a non-resettable thermal link and comprises a current carrying device (generally incorporating a low melting point alloy) responsive to the application of external heat to non-resettably stop the passage of current therethrough.) The resistor R is thermally coupled to the thermal fuse TF (as schematically indicated by a line 32) so as to heat the thermal fuse when a current passes through the resistor. (Note that the diode D2 could be connected to the end 24, rather than to the end 28, of the second conductor 14 with the diode D3 still connected to the end 28.)

It will be seen from the foregoing that, when the switch S is closed, the above-described circuit components are so interconnected that, during half-cycles of the AC supply of one polarity only (positive half-cycles in the illustrated case, though it would be negative half-cycles if the diode D1 were oppositely poled), heating current from the supply will flow through a first current flow path comprising the fuse F, the thermal fuse TF, the first conductor 12, the diode D1, the second conductor 14, the diode D3 and the control unit 30. (The diode D2 and resistor R do not form part of that path because the diode D2 is poled so as to be reverse biassed.) During normal operation, that is while the insulative means 16 remains substantially insulative, substantially no current flows from the supply during supply half-cycles of the opposite polarity. Thus, current cannot flow through the first path because the diodes D1 and D3 are reverse biassed; and cannot flow through the diode D2 because, although the diode D2 is not reverse biassed, the diode D2 is followed by the parallel combination of the reverse biassed diode D1 and the high impedance of the insulative means 16.

It will be noted that, by virtue of the diode D1 connecting the ends 22, 24 of the conductors 12, 14 together, the heating current flows in opposite directions in the first and second conductors 12, 14, respectively. Thus, the electromagnetic fields produced by the current flowing through the respective conductors 12, 14 tend to cancel one another, thereby greatly attenuating the nett field strength compared to what would be the case if the current flowed in the same direction through the two conductors. Accordingly, in view of recent suggestions that prolonged intimate exposure to electromagnetic fields produced by electric blankets or pads may be harmful, the above field cancellation feature represents an important advantage in the case where the heating device is, as in the case of an overblanket, an all-night underblanket or an electric pad, intended to be energised when in close proximity to a user.

The operation of the heating device described with reference to Figure 2 will now be described, considering first the case in which the insulative means 16 of the heating element 10 comprises a plastics material whose impedance does not decrease with temperature, or at least can be considered for present purposes as not doing so, for example polyethylene. The device provides protection against overheating of the heating element 10 in accordance with the following two mechanisms.

The first protective mechanism is substantially the same as for the device of Figure 1. Thus, in normal operation, the current flowing through the fuse F is half-wave rectified. Also, in normal operation, the temperature of the insulating means 16 does not come near its softening temperature. However, in some circumstances, for instance in the event of a ruck in the blanket or pad, the insulative means 16 can be locally heated to a temperature at which it melts or softens sufficiently for the conductors 12, 14 to come into contact with one another. That is, the impedance of the insulative means 16 is locally reduced, in this case by a short circuit. (Note that the impedance is not necessarily reduced to zero, since the short circuit may be "lossy"; however, there will be a significant localised drop in impedance.) When this happens the diode 16 is short-circuited by the local impedance reduction, so that full wave AC current starts to flow through the fuse F. This at least nearly doubles the current flowing through the fuse F, causing it to "blow" (rupture due to excessive current flow through it). The nearer the fault (overheat) location is to the end of the element 10 nearer the supply, then the less impedance there is in the current path and hence the greater the current. The root-mean-square rating of the fuse F is selected such that, at least in theory, it will rupture even when the fault is located at the end of the element 10 remote from the supply. This action is particularly useful since a short circuit near the supply end of the heating element 10 may cause a current to flow that is sufficiently large to interfere with the action of any other protective mechanisms.

The second protective mechanism is as follows. The localised reduction in the impedance of the insulative means 16 caused in this case by a short circuit enables current to flow from the supply, during supply half-cycles of the other polarity (negative half-cycles in the present case), via a second current flow path comprising the resistor R, the diode D2, the part of the second conductor 14 to the left (as illustrated) of the location of the overheat (short circuit) producing the localised reduced impedance of the insulative means 16, the localised reduced impedance (short circuit), the part of the first conductor 12 to the left (as illustrated) of the location of the overheat producing the localised reduced impedance of the insulative means 16, the thermal fuse TF and the fuse F. The current flowing (during half-cycles of the other polarity) through the second path heats the resistor R, which in turn heats the thermal fuse TF. The resistance value of the resistor R is chosen so that an amount of heat sufficient to cause actuation of the thermal fuse TF will be generated when the impedance of the insulative means 16 has dropped to a value that is sufficiently low to indicate that action to protect against the consequences of overheating of the heating element 10, namely interruption of energisation of the circuit, is necessary.

One or the other of the above protective mechanisms will cause de-energisation of the heating element 10. In the present case (the case in which the insulative means 16 of the heating element 10 comprises a plastics material whose impedance does not decrease with temperature, or at least can be considered for present purposes as not doing so ) it is likely that the first mechanism will act first, particularly if the location of the short circuit between the conductors 12, 14 is near the end of the heating element nearer the supply, though the second mechanism may act first, particularly if the location of the short circuit is near the end of the heating element 10 remote from the supply.

In the other case, that is where the insulative means 16 comprises a material ("NTC material") that has a negative temperature coefficient, that is whose impedance (or at least resistance) decreases with increasing temperature, for example polyvinylchloride ("PVC") which may or may not be doped with a material that enhances its conductivity, the operation of the device is similar to the case in which the insulative means 16 of the heating element 10 comprises a plastics material whose impedance does not decrease with temperature, or at least can be considered for present purposes as not doing so. However, in this case, the localised reduction in the impedance of the insulative material 16 produced by the NTC nature of the material may in many instances be sufficient to cause operation of the second mechanism before the material has softened/melted to cause a short circuit between the conductors 12, 14. In this event, the second mechanism may tend to be the primary one and the first mechanism will be operative only as a back-up or in the event of a not particularly "lossy" short circuit near the end of the heating element nearer the supply causing a very large increase of current whereby the fuse F will blow quickly.

The control unit 30 (if provided) may be of a variety of forms as known to those skilled in the art. Its function is to control the level of heating. It may, for example, be manually or automatically operable, and may be of a mechanical, thermal or electronic form. In a simple case, it could be a bimetallic strip arrangement arranged to open and close a switch to enable/disable heating current flow from time to time in accordance with the temperature of the heating device. A more sophisticated arrangement might continuously control the flow of heating current, for example by variable phase angle firing of a thyristor. The diode D3 represents a safety feature, active under both normal and overheat conditions, in that if the diode D1 were to fail short circuit the diode D3 can limit the current flowing through the control unit 30 to a value set in the control unit. This assumes that the control unit 30 can pass current in both directions. However, if the control unit 30 is of a half-wave rectifying nature, for example if it comprises a thyristor, the safety feature just described will be provided by the control unit whereby the diode D3 can be omitted.

Other heating devices embodying the invention will now be described with reference to Figures 3 to 11. The devices shown in Figures 3 to 7 are similar in many respects to that shown in Figure 2 and will therefore be described only in so far as they differ therefrom.

Considering first Figure 3, this differs from Figure 2 in two respects, both of which provide enhancement of the control action obtained in the event of an overheat by reducing the effective impedance of the circuit under overheat conditions.

The first of the above respects comprises the connection of a diode D4 between the respective ends 24, 28 of the second conductor 14, the diode D4 being poled so as to constitute part of the above-described second current flow path. It will be seen from Figure 3 that the portion of the second path constituted in Figure 2 by the part of the second conductor 14 to the left (as illustrated) of the location of the overheat is replaced in Figure 3, due to the addition of the diode D4, by the parallel combination of the parts of the second conductor 14 to both the left and the right of the location of the overheat. That is, the impedance of the second path in the event of an overheat is reduced whereby protective action can take place more quickly.

The second of the above respects comprises the connection of a diode D5 between the respective ends 22, 26 of the first conductor 12, the diode D5 also being poled so as to constitute part of the above-described second current flow path. It will be seen from Figure 3 that the portion of the second path constituted in Figure 2 by the part of the first conductor 12 to the left (as illustrated) of the location of the overheat is replaced in Figure 3, due to the addition of the diode D5, by the parallel combination of the parts of the first conductor 12 to both the left and the right of the location of the overheat. That is, the impedance of the second path in the event of an overheat is reduced whereby protective action can take place more quickly.

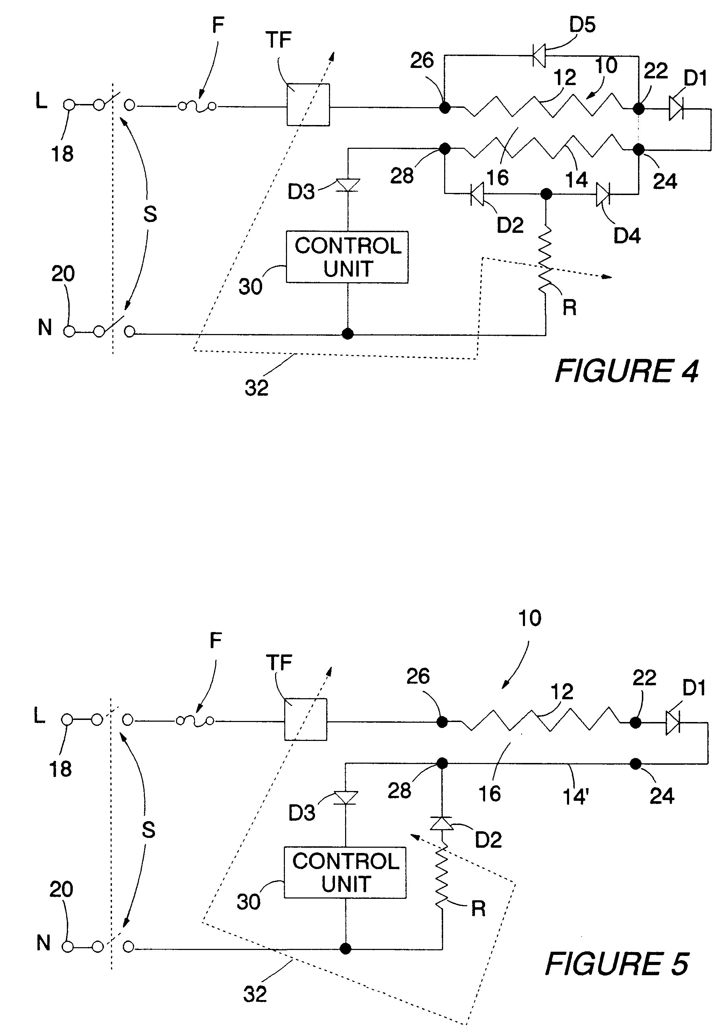

The heating device of Figure 4 is the same as that of Figure 3, except that, in this case, the diode D4 is connected at one of its ends to the junction between the resistor R and the diode D2 and connected at its other end to the end 24 of the second conductor 14, the diode D4 in this case also being poled so as to constitute part of the second current flow path. It can be seen from Figure 4 that the device of Figure 4 provides the same operational enhancements as the device of Figure 3 (as just described).

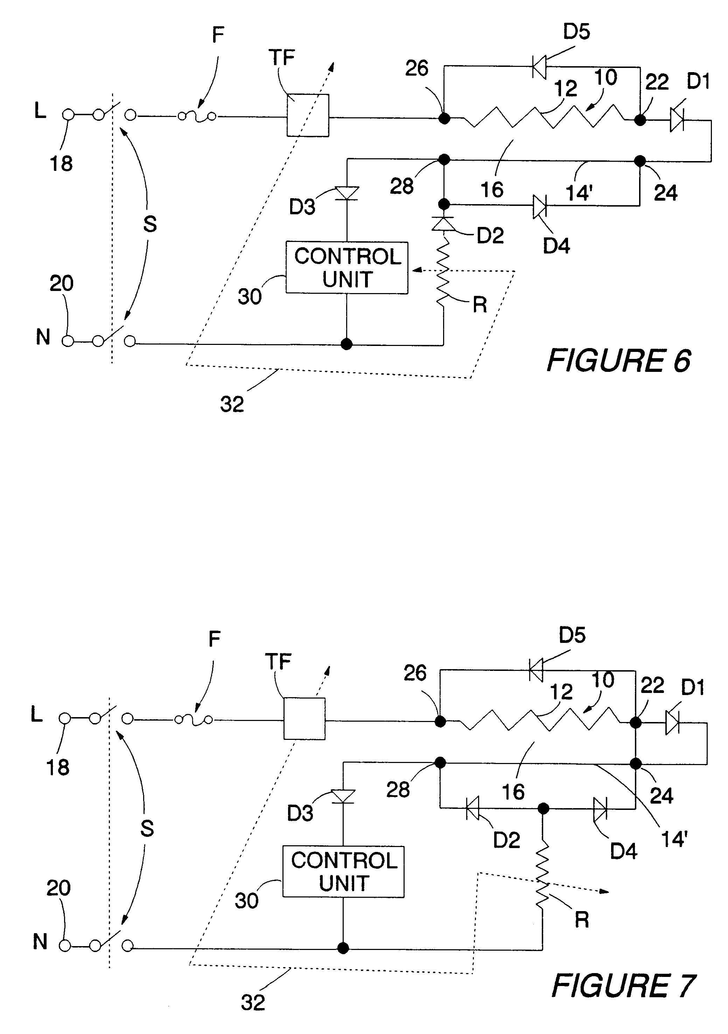

The heating devices shown in Figures 5, 6 and 7 are the same as (and operate in the same way as) those shown in Figures 2, 3 and 4, respectively, except that in each case the resistive second conductor 14 is replaced by a substantially non-resistive (e.g. copper wire) second conductor 14'. Note, however, that the diode D4 could be replaced by a short circuit in Figure 6. Note further that, in Figure 7: the diode D2 could be replaced by an open circuit; and/or either of the diodes D2 and D4 (but not both) could be replaced by a short circuit.

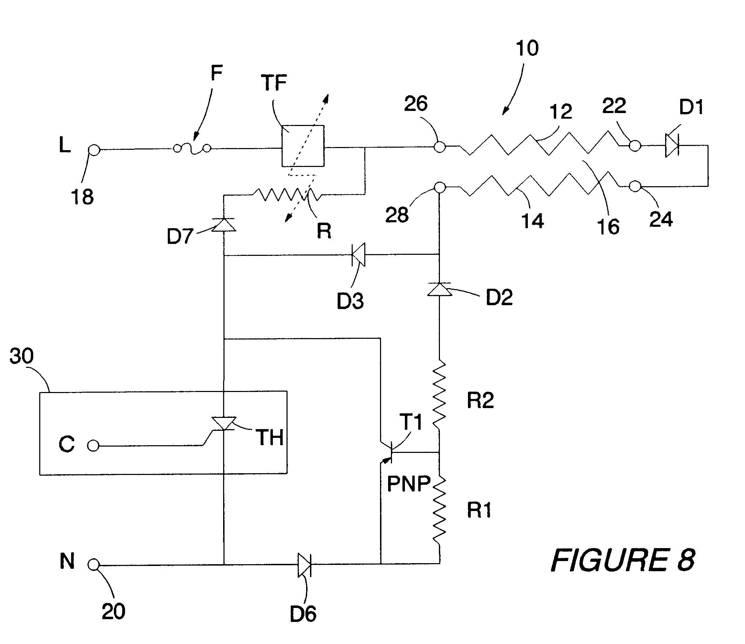

Figure 8 shows a further embodiment of the invention. A heating element 10 having a first conductor 12 and a second conductor 14 has a first diode D1 connected between an end 22 of the first conductor 12 and an end 24 of the second conductor 14. The other end 26 of the first conductor 12 is connected to a live AC terminal 18 via a thermal fuse TF and a fuse F. The other end of the second conductor 14 is connected to a neutral terminal 20 via a diode D3 and a control unit 30 having a thyristor TH. The first conductor 12 and the second conductor 16 are separated by an insulator 16.

In normal operation, the control unit 30 switches on the thyristor TH and allows current flow during one half cycle of the AC supply along the path through the fuse F, the thermal fuse TF, the first conductor 12, the diode D1, the second conductor 14, the diode D3 and the thyristor TH. The action of the diode D1 prevents any current flow during the opposite half cycle.

In the event of overheating occurring, the insulation 16 starts to breakdown and provides a conductive path between the first conductor 12 and the second conductor 14 bypassing the diode D1. In this circumstance, a current path then appears from the neutral terminal 20 through the diode D6, the resistor R1, the resistor R2, the diode D2, the second conductor 14, the reduced impedance portion of the insulator 16, the first conductor 12, the thermal fuse TF and the fuse F. The flow of this current produces a voltage across the resistor R1 that is applied to the base terminal of a transistor T1. This voltage turns on the transistor T1 and renders it conductive. The action of the transistor T1 in combination with the diode D2, the resistor R1 and the resistor R2 is to sense voltages of the opposite polarity between the second conductor 14 and the neutral terminal 20. When such voltages occur, the transistor T1 is switched on.

When the transistor T1 is switched on, a current path is present from the neutral terminal 20 through the diode D6, the transistor T1, the diode D7, the resistor R, the thermal fuse TF and the fuse F. The current through this path serves to heat the resistor R and actuate the thermal fuse TF to isolate further current flow.

The embodiment of Figure 8 is particularly advantageous since only a small voltage on the second conductor 14 of the opposite polarity need be present to switch on the transistor T1. The transistor T1 then effectively amplifies this signal to produce a sufficiently large current to heat the resistor R and actuate the thermal fuse TF.

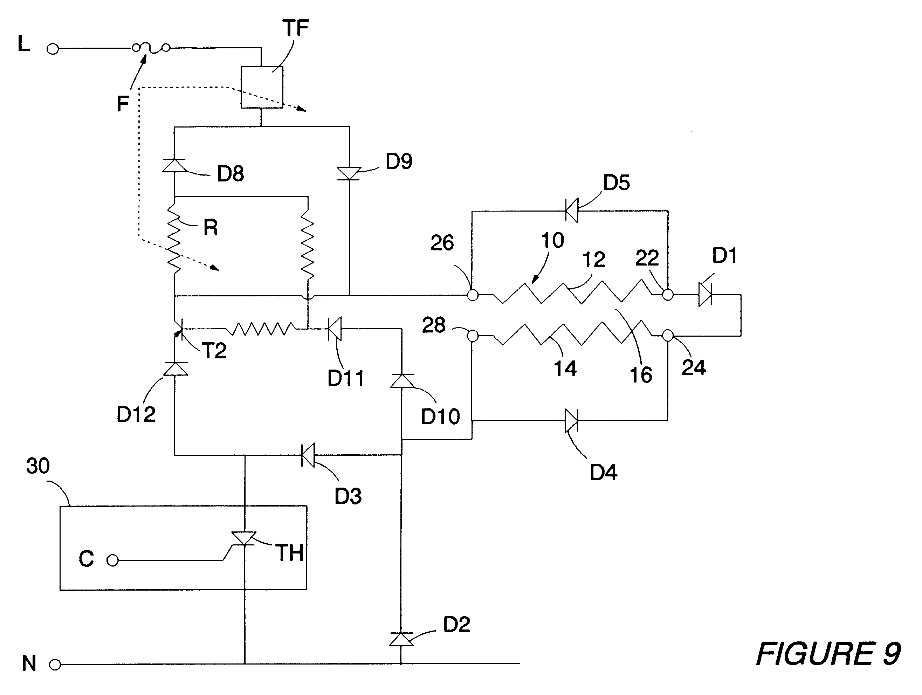

Figure 9 illustrates another embodiment of the invention. The heating element 10 has a first conductor 12 and a second conductor 14 separated by insulating material 16 as in the previous embodiments. A diode D1 is connected between the ends 22 and 24 of the first conductor 12 and the second conductor 14 respectively.

In normal operation, the flow of current through the heating element 10 is controlled by the thyrister TH. The thyrister is part of the control unit 30. When the thyrister TH is conductive, current will flow during positive half cycles of the mains through the fuse F, the thermal fuse TF, the diode D9, the first conductor 12, the diode D1, the second conductor 14, the diode D3 and the thyrister TH. During negative half cycles in normal operation, the diode D1 blocks the flow of current.

Fault conditions are detected during negative half cycles. If an overheating fault occurs in the heating element 10, then an path of reduced impedance via the insulator 16 will occur due to heating between the first conductor 12 and the second conductor 14 at least partially melting the insulator 16. This path of reduced impedance bypasses the diode D1 during negative half cycles. In such fault conditions during negative half cycles, current will flow through the diode D2, the second conductor 14 (and at least partially via the diode D4 to cater for faults near the end 24 of the second conductor 14), the first conductor 12 (and at least partially through the diode D5 to cater for faults near the end 22 of the first element 12), the resistor R, the diode D8, the thermal fuse TF and the fuse F. The current flow through the resistor R serves to heat the resistor R and so actuate the thermal fuse TF to interrupt current flow through the circuit.

The circuit is protected against the possibility of the thyrister TH going short circuit by the action of the transistor T2. During negative half cycles the base of the transistor T2 is biased by three diodes, namely the diode D2, the diode D10 and the diode D11. Similarly, the emitter of the transisitor T2 is biased by three diodes, namely the diode D2, the diode D3 and the diode D12. As the bias to the base and the emitter of the transistor T2 are the same, the transistor T2 does not conduct.

If the thyrister circuit goes to a short circuit, then the emitter is now biased by only one diode, namely the diode D12. The base remains biased by the diode D2, the diode D10 and the diode D11 giving enough voltage difference between the base and emitter of the transistor T2 to cause the transistor T2 to conduct. With the transistor T2 conducting, current flows through the short circuited thyrister TH, the diode D12, the transistor T2, the resistor R, the diode D8, the thermal fuse TF and the fuse F. The flow of current through the resistor R causes the resistor R to heat thereby actuating the thermal fuse TF to interrupt current flow through the circuit.

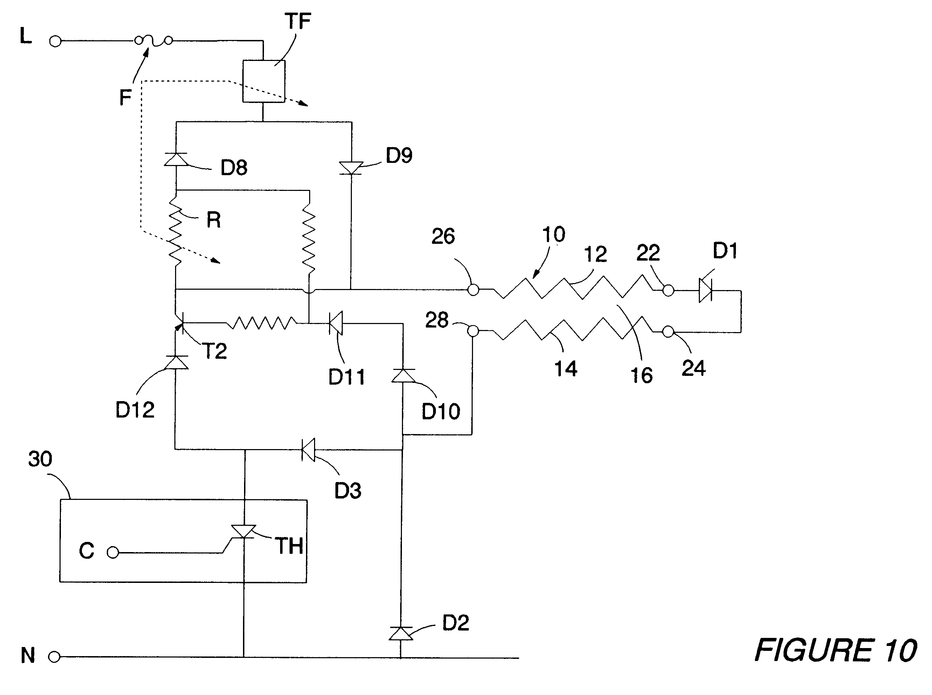

Figure 10 shows a variation of the circuit of Figure 9 in which the diodes D4 and D5 are provided in parallel with the second conductor 14 and the first conductor 12 respectively have been omitted. In this embodiment, additional care is needed in choosing the values of the various components to ensure that sufficient current will flow through the resistor R during the worst case overheating fault at the ends 22 and 24 of the first conductor 12 and second conductor 14 respectively to cause the thermal fuse TF to be actuated. In other respects, the operation of the circuit of Figure 10 is the same as that of the circuit of Figure 9.

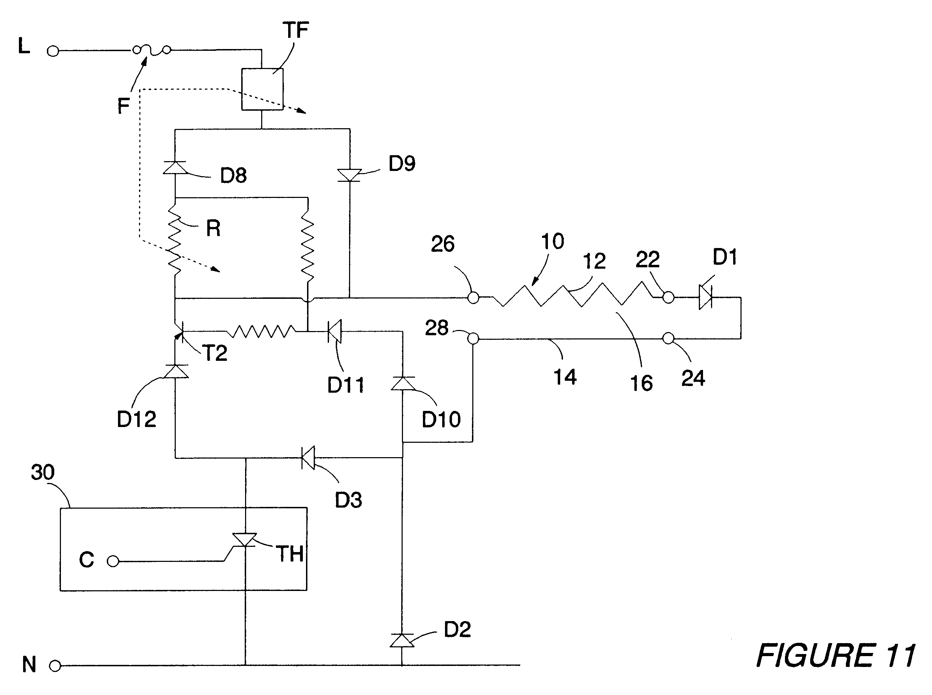

Figure 11 shows another variation upon the circuit of Figure 9. In this case the diodes D4 and D5 have been omitted and the second conductor 14 has been replaced with a low resistance conductor that provides no resistive heating action in itself. In other respects, the operation of the circuit of Figure 11 is the same as the circuit of Figure 9.

Note that the above-described heating devices can be modified in other ways than those mentioned above. For example, the fuse F and the thermal fuse TF can be located in other positions in the first current flow path than those shown. Further, the thermal fuse TF could be replaced by any other form of thermally actuated circuit interruption means of a resettable or non-resettable form, e.g. a bimetallic thermal cut-out or a positive temperature coefficient device as disclosed in UK Patent Application Publication GB-A-2 047 487. Also, the diode D1 could be replaced by some other form of half-wave rectifier (device or circuit). For instance, as described with reference to Figure 4 of the above-cited GB-A-1 155 118, the diode D1 could be replaced by a thyristor (silicon controlled rectifier), in which event control of the heating current could be achieved by means controlling firing of the thyristor whereby the illustrated control unit 30 would not be needed.

The heating devices described above with reference to the drawings are embodied in the form of electric blankets. However, heating devices in accordance with the invention may be embodied in other forms, for example as a heated boot (either conventional or in the form of a boot that can accommodate both feet of someone sitting down), a heated mat, a heated shawl, an electric duvet, a heated face mask (for medical or other uses) or an electric footwarmer for a bed (a device in which a small heating pad comprising a flexible substrate is wrapped to a board and the resultant assembly is used for local heating of the interior of a bed in a manner analogous to a hot water bottle or bag). In many of these applications the substrate is flexible, though this need not always be the case. Further, though in many of the applications the substrate is sheet-like (though not necessarily planar), this again need not always be the case.

## Claims

1. A heating device comprising:
a substrate;
a heating element (10) arranged to heat the substrate, the heating element comprising first and second elongate conductors (12, 14) arranged coextensively with one another, at least one of the conductors (12) being a resistive heating conductor, and insulative means (16) that separates the first and second conductors;
input terminals (18, 20) for connection to an AC supply;
a first half-wave rectifier (D1) connected between an end (22) of the first conductor and an end (24) of the second conductor;
the first and second conductors, the input terminals and the first half-wave rectifier being so interconnected that, during half-cycles of the AC supply of one polarity only, heating current from the supply will flow through a path comprising the first conductor, the first half-wave rectifier and the second conductor, with the heating current flowing in opposite directions in the first and second conductors, respectively; and
a fuse (F) connected in said path;
the heating device being characterised by:
a thermally actuated circuit interruption device (TF) connected in said path;
a second half-wave rectifier (D2) connected between one of the input terminals (20) and an end (24) of the second conductor; and
a resistor (R) which is thermally coupled to the thermally actuated circuit interruption device, the resistor being electrically coupled to the second half-wave rectifier such that, in the event of a reduction in the impedance of the inSulative means; current flows from the supply during half-cycles of the AC supply of the opposite polarity through a second path including the second half-wave rectifier and the reduced impedance to cause current to flow through the resistor to actuate the thermally actuated circuit interruption device.

2. A heating device according to claim 1, comprising a third half-wave rectifier (D4) connected between the respective ends of the second conductor (14) and poled so as to constitute part of said second path.

3. A heating device according to claim 1, wherein the first conductor (12) is a resistive heating conductor, the second conductor (14) is a substantially non-resistive conductor, and the respective ends (24, 28) of the second conductor are short-circuited together.

4. A heating device according to claim 1, comprising a third half-wave rectifier (D4) connected at one of its ends to the junction between the resistor (R) and the second half-wave rectifier (D2) and connected at its other end to the other end (24) of the second conductor (14), the third half-wave rectifier being poled so as to constitute part of said second path.

5. A heating device according to claim 1, wherein the first conductor (12) is a resistive heating conductor, the second conductor (14') is a substantially non-resistive conductor, and the junction between the resistor (R) and the second half-wave rectifier (D2) is short-circuited to the other end (24) of the second conductor.

6. A heating device according to any one of the preceding claims, comprising another half-wave rectifier (D5) connected between the respective ends of the first conductor (12) and poled so as to constitute part of said second path.

7. A heating device according to any one of the preceding claims, comprising a heating control unit (30) connected in the first-mentioned path for controlling flow of the heating current.

8. A heating device according to claim 7, wherein the heating control unit (30) is connected in series with a further half-wave rectifier (D3) between one of the input terminals (20) and the end (28) of the second conductor (14) opposite to that connected to the first-mentioned half-wave rectifier (D1).

9. A heating device according to any one of the preceding claims, wherein the thermally actuated circuit interruption device is a thermal fuse (TF).

10. A heating device according to any one of the preceding claims, wherein the insulative means (16) is of a material whose impedance decreases with increasing temperature.

11. A heating device according to any one of the preceding claims, in which the substrate is flexible.

12. A heating device according to any one of the preceding claims, in which the substrate is in the form of a sheet.

13. A heating device according to any one of the preceding claims, in which the second path includes the resistor (R), the second half-wave rectifier (D2) and the reduced impedance connected in series.

14. A heating device according to any one of claims 1 to 12, in which current flow of the opposite polarity through the second path causes current to flow through a transistor (T1) connected in series with the resistor (R) between the input terminals (18, 20).

15. A heating device according to claim 14, in which the second half-wave rectifier (D2) is connected to a base terminal of the transistor (T1), current flow through the second path forcing a voltage at the base terminal that allows current to flow through the transistor (T1).

16. A heating device according to any one of claims 14 and 15, in which the transistor (T1) serves to sense voltages of the opposite polarity between the second conductor (14) and one of the input terminals and cause current to flow through the resistor in response to such sensed voltages.
